# EUROPÄISCHE PATENTSCHRIFT

(11) **EP 0 870 639 B1**
(45) Veröffentlichungstag und Bekanntmachung des Hinweises auf die Patenterteilung: **27.09.2000**
(21) Anmeldenummer: 98104571.9
(22) Anmeldetag: 13.03.1998
(51) Int. Cl.: B60K 15/01

(54) **Aus Vorderwagen und Nachläufer bestehender Gelenkomnibus mit gasbetriebenem Verbrennungsmotor**
Articulated bus with-gas-operated engine composed of a front and a rear car
Autobus articulé à moteur alimenté en gaz constitué d'une voiture avant et d'une voiture arrière

(30) Priorität: 09.04.1997 DE 19714543
(43) Veröffentlichungstag der Anmeldung: 14.10.1998
(73) Patentinhaber: EvoBus GmbH, 70567 Stuttgart (DE)
(72) Erfinder: Wenkle, Siegbert, 73728 Esslingen (DE)
(74) Vertreter: Weiss, Klaus

(56) Entgegenhaltungen:
- EP-A- 0 805 054
- DE-A- 3 126 095
- DE-A- 3 407 327
- DE-U- 29 607 488

## Beschreibung

Die Erfindung betrifft einen aus Vorderwagen und Nachläufer bestehenden Omnibus mit gasbetriebenem Verbrennungsmotor und einer Hochdruckgasleitung, die zwischen Vorderwagen und Nachläufer dachseitig außerhalb des Fahrgastraumes verlegt ist und aus karosserieseitig festgelegten Rohrabschnitten besteht, die durch flexible Schlauchabschnitte miteinander verbunden sind, wobei der mittlere Rohrabschnitt beweglich am Tragbügel eines Vorderwagen und Nachläufer untereinander verbindenden Faltenbalges angeordnet ist.

Eine derartige Hochdruckgasleitung, durch die auf dem Vorderwagen bevorratet mitgeführtes Gas dem Nachläufer und von dort dem Verbrennungsmotor zugeführt wird, ist durch das DE 296 07 488 U1 bekannt. Die Hochdruckgasleitung verläuft dabei etwa S-förmig, wobei der mittlere Rohrabschnitt über dem Drehpunkt zwischen beiden Fahrzeugteilen schwenkbar gelagert ist. Bei Kurvenfahrten des Fahrzeuges ändern sich somit die Knickwinkel der beiden Schlauchabschnitte laufend, was über längere Betriebszeiten zu Materialermüdigungen führen kann, was noch dadurch begünstigt wird, daß wegen des bis zu 200 bar reichenden Druckes das Schlauchmaterial eine große Wandstärke und eine ausgeprägte Armierung besitzt, die das Schlauchmaterial relativ unelastisch machen.

Es ist Aufgabe der Erfindung, den Schlauchverlauf so zu gestalten, daß der Hochdruckschlauch auch bei extremer Kurvenfahrt nur eine geringe Biegung erfährt.

Diese Aufgabe wird durch die Merkmale des Patentanspruches 1 gelöst. Gefahrlos ist es dadurch möglich, einen auf dem Vorderwagen und dem Nachläufer angeordneten Gasvorrat ohne druckreduzierende Maßnahmen miteinander zu verbinden, so daß sich auch ein Auffüllen des Gasvorrates sehr einfach gestaltet.

Eine allen Anforderungen des Fahrbetriebes gerecht werdende Führung des mittleren Rohrabschnittes wird erreicht, wenn dieser Rohrabschnitt etwa V-förmig gebogen ist, mit Spiel ein Langloch einer auf den Tragbügel aufgesetzten Führungseinrichtung durchläuft und mit einem die Führungseinrichtung U-förmig umgreifenden Reiter fest verbunden ist.

In weiterer Ausgestaltung der Erfindung weist der Reiter dem Außendurchmesser des mittleren Rohrabschnittes entsprechende, diesem beidseitig mit Abstand zugeordnete und quer zur Verschieberichtung ausgerichtete Führungen auf.

Um auch bei extremen Betriebsbedingungen wie Vereisungen und Fremdkörpereinwirkungen eine ungestörte Verschiebebewegung des mittleren Rohrabschnittes bei Kurvenfahrt und unebener Fahrbahn zu gewährleisten, ist oberseitig des Reiters ein Kugelgelenk festgelegt, an das sich eine dem Verlauf des zugeordneten Schlauchabschnittes zum Vorderwagen bzw. Nachläufer folgende Strebe anschließt, die am Vorderwagen bzw. Nachläufer gleichfalls gelenkig gelagert ist.

Die Gleitbewegung des mitteleren Rohrabschnittes und des Reiters werden begünstigt, wenn das Langloch der Führungseinrichtung mit aus vorzugsweise selbstschmierendem Kunststoff bestehenden Gleitflächen versehen ist.

Die Betriebssicherheit auch nach langer Betriebszeit ist gegeben, wenn der mittlere Rohrabschnitt aus einem inneren, die Schlauchabschnitte aufnehmenden Rohr und aus einem dieses umgebenden äußeren Rohrteil besteht.

Ein Ausführungsbeispiel der Erfindung wird nachfolgend anhand der Zeichnung näher erläutert. Es zeigt:
- Fig. 1: eine vereinfachte Draufsicht auf den Verbindungsbereich eines Gelenkomnibusses und die Lage der Verbindungsleitung bei Geradeausfahrt und strichpunktiert dargestellter Linkskurvenfahrt,
- Fig. 2: die Draufsicht gemäß Fig. 1 und strichpunktiert wiedergegebener Rechtskurvenfahrt und
- Fig. 3: den Schnitt nach der Linie III-III in Fig. 1

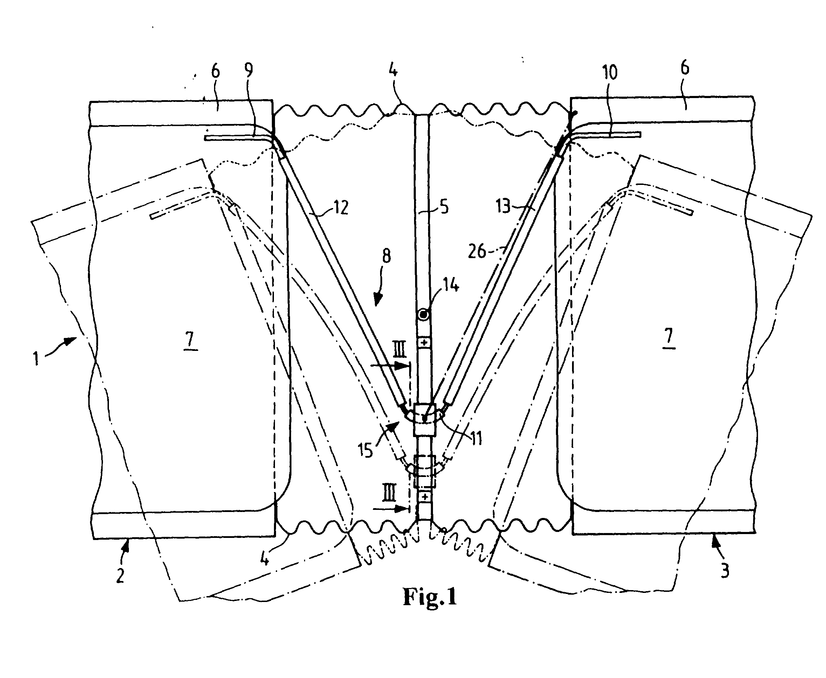

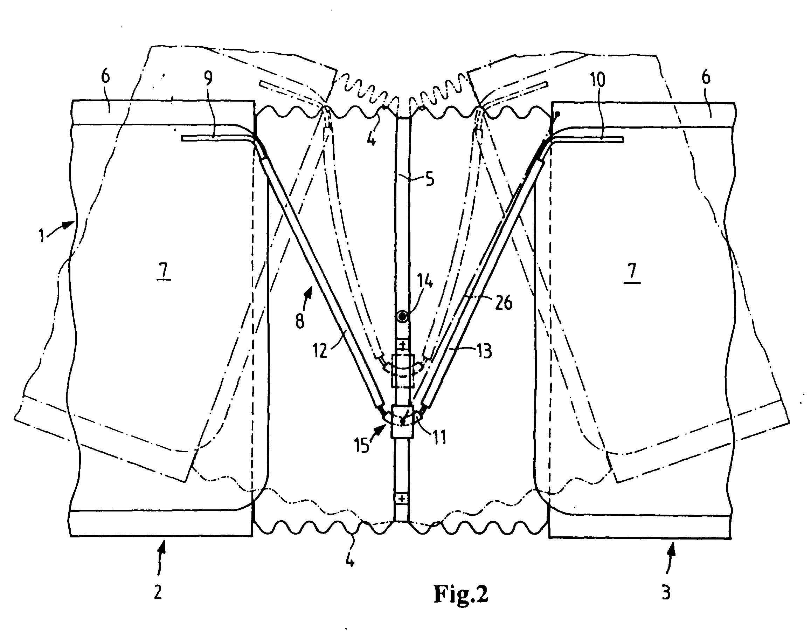

Ein gemäß den Fig. 1 und 2 nicht näher dargestellter Gelenkomnibus 1 besteht aus einem Vorderwagen 2 und einem Nachläufer 3, wobei beide Wagenteile durch einen Faltenbalg 4 miteinander in Verbindung stehen, der einen mittig in Fahrzeugquerrichtung ausgerichteten, durch nicht dargestellte Führungsmittel in Form von Streben in bekannter Weise getragenen Tragbügel 5 aufweist.

Der Gelenkomnibus 1 ist mit einer nicht wiedergegebenen gasbetriebenen Brennkraftmaschine versehen und beherbergt auf dem Dach 6 des Vorderwagens 2 und des Nachläufers 3 einen Gasvorrat, der jeweils durch eine Haube 7 abgedeckt ist. Beide Gasvorräte sind durch eine Hochdruckgasleitung 8 miteinander verbunden, die aus karosserieseitig festgelegten Rohrabschnitten 9, 10 und 11 besteht, die durch flexible Schlauchabschnitte 12 und 13 miteinander verbunden sind.

Während die Rohrabschnitte 9 und 10, ortsfest festgelegt, durch die jeweils zugeordnete Haube 7 zum jeweiligen Gasvorrat führen, ist der mittlere Rohrabschnitt in später noch näher beschriebener Weise bei Kurvenfahrt und unebener Fahrbahn außerhalb des Schwenkpunktes 14 zwischen Vorderwagen 2 und Nachläufer 3 am Tragbügel 5 oberseitig in Fahrzeugquerrichtung verschiebbar gelagert. Hierzu ist auf dem Tragbügel 5 eine Führungseinrichtung 15 aufgesetzt, die vom mittleren Rohrabschnitt 11 durchlaufen wird. Durch diese außerhalb des Schwenkpunktes 14 gelegene Verschiebemöglichkeit des mittleren Rohrabschnittes 11 werden - wie dies in den Fig. 1 und 2 strichpunktiert angedeutet - selbst bei extremer Kurvenfahrt die flexiblen Schlauchabschnitte 12 und 13 nur leicht gebogen, was deren Dauerhaltbarkeit entscheidend erhöht, so daß es auch gefahrlos möglich ist, den vollen Speicherdruck auf die Hochdruckgasleitung 8 zu geben. Da somit beide Speicherinhalte ohne eine zwischengeschaltete Druckreduzierung miteinander in Verbindung stehen, ist man frei hinsichtlich der Wahl des Betankungsanschlusses.

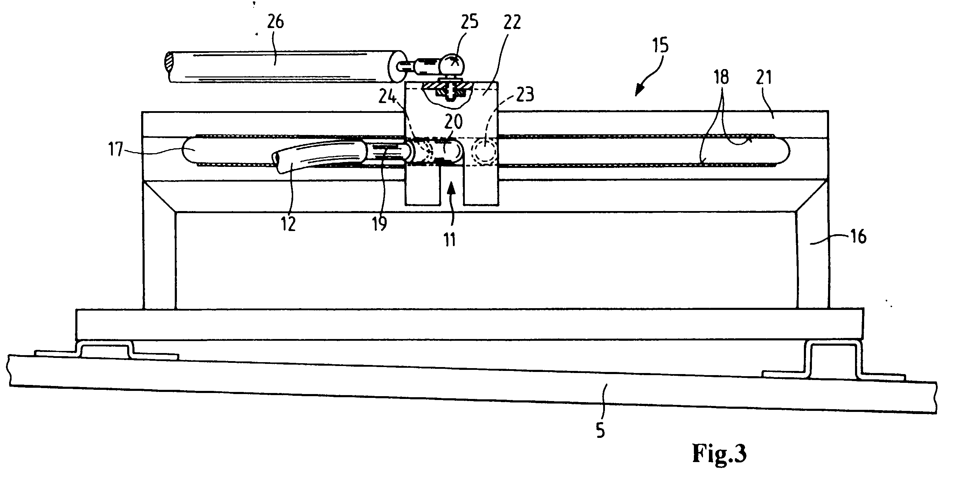

In Fig. 3 ist die auf den oberseitig gewölbt verlaufenden Tragbügel 5 aufgesetzte Führungseinrichtung 15 näher dargestellt, die ein Traggestell 16 mit einem Langloch 17 aufweist, das mit einer oberen und unteren, aus einem selbstschmierenden Kunststoff bestehenden Gleitfläche 18 versehen ist. Um den etwa V-förmig gebogenen mittleren Rohrabschnitt 11, der zur Erhöhung der Sicherheit aus einem inneren, die Schlauchabschnitte 12 und 13 aufnehmenden inneren Rohr 19 und aus einem dieses umgebenden äußerem Rohrteil 20 besteht, in das Langloch 17 einbringen zu können, ist das Traggestell 16 mit einem, eine obere Begrenzungswand des Langloches 17 bildenden, aufschraubbaren Balken 21 versehen.

Um die Führung des mit Spiel das Langloch 17 durchlaufenden mittleren Rohrabschnittes 11 zu erhöhen, ist dieser fest mit einem U-förmigen Reiter 22 verbunden, der von oben her die Führungseinrichtung 15 auf drei Seiten umgreift. Zur Stabilisierung des Reiters 22 sind zwei das Langloch 17 durchgreifende, fest mit dem Reiter 22 verbundene Führungen 23 und 24 vorgesehen. Um auch bei einer z.B. witterungsbedingt oder durch Astwerk hervorgerufenen Schwergängigkeit hinsichtlich der Verschiebebewegung des mittleren Rohrabschnittes 11 die Verschiebemöglichkeit sicherzustellen, ist oberseitig des Reiters 22 ein Kugelgelenk 25 vorgesehen, von dem aus eine Strebe 26 wegführt, die - wie die Fig. 1 und 2 andeutungsweise zeigen - am Nachläufer 3 gleichfalls gelenkig festgelegt ist.

## Patentansprüche

1. Aus Vorderwagen (2) und Nachläufer (3) bestehender Gelenkomnibus mit gasbetriebenem Verbrennungsmotor und einer Hochdruckgasleitung (8), die zwischen Vorderwagen und Nachläufer dachseitig außerhalb des Fahrgastraumes verlegt ist und aus karosserieseitig festgelegten Rohrabschnitten (9,10,11) besteht, die durch einen mittleren Rohrabschnitt bildende flexible Schlauchabschnitte (12,13) miteinander verbunden sind, wobei der mittlere Rohrabschnitt beweglich am in Fahrzeugquerrichtung ausgerichteten Tragbügel (5) eines Vorderwagen und Nachläufer untereinander verbindenden Faltenbalges (4) angeordnet ist,
**dadurch gekennzeichnet,**
daß der mittlere Rohrabschnitt (11) mit Abstand vom auf dem Tragbügel liegenden Schwenkpunkt (14) zwischen Vorderwagen (2) und Nachläufer (3) plaziert ist und bei Kurvenfahrt sowie bei Fahrt auf unebener Fahrbahn des Gelenkomnibusses (1) entlang des Tragbügels (5) in Fahrzeugquerrichtung verschiebbar ist.

2. Gelenkomnibus nach Anspruch 1,
**dadurch gekennzeichnet,**
daß der mittlere Rohrabschnitt (11) etwa V-förmig gebogen ist, mit Spiel ein Langloch (17) einer auf dem Tragbügel (5) aufgesetzten Führungseinrichtung (15) durchläuft und mit einem die Führungseinrichtung (15) U-förmig umgreifenden Reiter (22) fest verbunden ist.

3. Gelenkomnibus nach Anspruch 2,
**dadurch gekennzeichnet,**
daß der Reiter (22) dem Außendurchmesser des mittleren Rohrabschnittes (11) entsprechende, diesem beidseitig mit Abstand zugeordnete und quer zu Verschieberichtung ausgerichtete Führungen (23, 24) aufweist.

4. Gelenkomnibus nach den Ansprüchen 2 und 3,
**dadurch gekennzeichnet,**
daß oberseitig des Reiters (22) ein Kugelgelenk (25) festgelegt ist, an das sich eine dem Verlauf des zugeordneten Schlauchabschnittes (12; 13) zum Vorderwagen (2) bzw. Nachläufer(3) folgende Strebe (26) anschließt, die am Vorderwagen (2) bzw. Nachläufer (3) gleichfalls gelenkig gelagert ist.

5. Gelenkomnibus nach einem oder mehreren der vorangegangenen Ansprüche,
**dadurch gekennzeichnet,**
daß das Langloch (17) der Führungseinrichtung (15) mit aus vorzugsweise selbstschmierendem Kunststoff bestehenden Gleitflächen (18) versehen ist.

6. Gelenkomnibus nach einem oder mehreren der vorangegangenen Ansprüche,
**dadurch gekennzeichnet,**
daß der mittlere Rohrabschnitt (11) aus einem inneren, die Schlauchabschnitte (12, 13) aufnehmenden Rohr (19) und einem dieses umgebenden äußeren Rohrteil (20) besteht.

## Claims

1. An articulated bus consisting of a front car (2) and a trailer (3) having a gas-driven combustion engine and a high-pressure gas line (8) which is mounted between front car and trailer at the roof end outside the passenger compartment and consists of pipe sections (9, 10, 11) mounted at the bodywork end, which are joined to one another by means of flexible hose lengths (12, 13) forming a central pipe section, the central pipe section being arranged on a bearing bracket (5), disposed in the transverse direction of the vehicle, of a bellows (4) connecting a front car and trailer,
**characterised in that**
the central pipe section (11) is positioned at a distance from the pivot point (14) lying on the bearing bracket between front car (2) and trailer (3) and is able to slide along the bearing bracket (5) in the transverse direction of the vehicle when the articulated bus is driving round corners and is driving on uneven road surfaces.

2. An articulated bus as claimed in claim 1,
**characterised in that**
the central pipe section (11) is bent so as to be approximately V-shaped, runs, with a clearance, through a longitudinal orifice (17) of a guide device (15) seated on the bearing bracket (5) and is permanently connected to a U-shaped rider (22) located around the guide device (15).

3. An articulated bus as claimed in claim 2,
**characterised in that**
the rider (22) has guides (23, 24) matching the external diameter of the central pipe section (11) assigned to and at a distance from each side thereof and aligned transversely to the direction of displacement.

4. An articulated bus as claimed in claims 2 and 3,
**characterised in that**
a ball and socket (25) is attached to the top end of the rider (22) which is adjoined by a strut (26) following the contour of the hose length (12; 13) assigned to the front car (2) or the trailer (3), which is also pivotally mounted on the front car (2) or the trailer (3).

5. An articulated bus as claimed in one or more of the preceding claims,
**characterised in that**
the longitudinal orifice (17) of the guide device (15) is provided with slide surfaces (18) preferably made from a self-lubricating synthetic material.

6. An articulated bus as claimed in one or more of the preceding claims,
**characterised in that**
the central pipe section (11) consists of an inner tube (19) which encloses the hose lengths (12, 13) and is surrounded by an outer tube component (20).

## Revendications

1. Omnibus articulé constitué d'une voiture avant (2) et d'un remorque (3), équipé d'un moteur à combustion interne fonctionnant au gaz et d'une conduite de gaz haute pression (8) posée entre la voiture avant et la remorque, côté toit, à l'extérieur de l'habitacle et constituée de tronçons tubulaires (9, 10, 11) fixés côté carrosserie, qui sont reliés ensemble au moyen de tronçons de tuyau flexibles (12, 13) constituant un tronçon tubulaire central, le tronçon tubulaire central étant disposé mobile sur l'étrier support (5), orienté dans la direction transversale du véhiculé, d'un soufflet (4) reliant entre elles la voiture avant et la remorque, caractérisé en ce que le tronçon tubulaire central (11) est placé à distance du point de pivotement (14), situé sur l'étrier support, entre la voiture avant (2) et la remorque (3) et est déplaçable le long de l'étrier support (5), dans la direction transversale du véhicule, dans le cas où l'omnibus articulé (1) roule en courbe, ainsi que dans le cas où il roule sur une piste de roulage inégale

2. Omnibus articulé selon la revendication 1, caractérisé en ce que le tronçon tubulaire central (11) est plié à peu près en forme de V, traverse avec du jeu un trou allongé (17) d'un dispositif de guidage (15) monté sur l'étrier support (5), et est relié rigidement à un baladeur (22), entourant en forme de U, le dispositif de guidage (15).

3. Omnibus articulé selon la revendication 2, caractérisé en ce que le baladeur (22) présente des guidages (23, 24) correspondant au diamètre extérieur du tronçon tubulaire central (11), associés à celui-ci des deux côtés en respectant un espacement et orientés transversalement par rapport à la direction de déplacement.

4. Omnibus articulé selon les revendications 2 et 3, caractérisé en ce qu'en face supérieure du baladeur (22) est fixée une articulation sphérique (25) à laquelle se raccorde une bielle (26), qui suit le tracé du tronçon de tuyau (12; 13) associé à la voiture avant (2) ou à la remorque (3), bielle également montée de façon articulée sur la voiture avant (2), respectivement sur la remorque (3).

5. Omnibus articulé selon l'une ou plusieurs des revendications précédentes, caractérisé en ce que le trou allongé (17) du dispositif de guidage (15) est doté de surfaces de glissement (18) constituées de préférence d'une matière synthétique autolubrifiante.

6. Omnibus articulé selon l'une ou plusieurs des revendications précédentes, caractérisé en ce que le tronçon tubulaire central (11) est constitué d'un tube intérieur (19), recevant les tronçons de tuyau (12, 13), et d'une partie tubulaire extérieure (20), entourant ce tube (19).
